# EUROPEAN PATENT APPLICATION

(11) **EP 1 637 039 A1**
(43) Date of publication of application: **22.03.2006**
(21) Application number: 04746191.8
(22) Date of filing: 21.06.2004
(51) Int. Cl.: A21D 6/00, A21D 13/08, A23G 3/00

(54) **BAKED CAKE**

(30) Priority: 26.06.2003 JP 2003183613
(71) Applicant: Ezaki Glico Co., Ltd., Osaka-shi, Osaka 555-8502 (JP)
(72) Inventor: HOSOKAWA, Seiji, Takarazuka-shi, Hyogo 6650845 (JP)
(74) Representative: UEXKÜLL & STOLBERG
(86) International application number: PCT/JP2004/008722
(87) International publication number: WO 2005/000027

(57) **Abstract**

A baked snack having a hollow stick shape obtained by baking a dough including an non-gelatinized flour and a gelatinized flour, wherein the dough does not substantially include active gluten. According to the present invention, a baked snack having a hollow stick shape that can be reliably shaped, easily melts in the mouth and is well-moistened with no powdery and dry texture is provided. In the baked snack of the present invention, a large amount of taste providing material can be blended in order to improve the taste thereof. The novel baked snack having the hollow stick shape suitable for the mass production and processing and having an even shape with reduced blistering can be provided without demanding any special device and complicated process.

## Description

### TECHNICAL FIELD

The present invention relates to making a novel baked snack having a hollow stick shape. More particularly, a purpose of the present invention is to provide a baked snack having a hollow stick shape that has high shapability, can be easily melted in the mouth and has no powdery and dry texture, without employing any special device and complicated process, as well as a method of making the baked snack.

### BACKGROUND ART

One popular snack on the market which can be mentioned is a biscuit having a hollow stick shape, whose inner part is filled with chocolate. This biscuit-type product having the hollow stick shape has selling points, such as a product, which does not get sticky even when, for example, exposed to extremely high temperature in summer, because chocolate is absent from the outer side thereof. Further, the product is easy to eat and can be sold in any place and in any season.

Specifically, for example, JP Patent Gazette No. 2894946 (Patent Document 1) describes a method of making a biscuit having a hollow cylindrical shape, in which an inner part is filled with chocolate and the main components of which are cereal flour, starch, saccharides, as well as oils and fats. JP Patent Gazette No.3295664(Patent Document 2) discloses a method of making a biscuit having a hollow stick shape in which an inner part is filled with chocolate and the main components of which are cereal flour, gelatinized wheat flour, saccharides, as well as oils and fats. Specifically, this document describes a method in which a dough is extruded from an extruder and thereby shaped and then baked to obtain the biscuit having the hollow cylindrical shape, and a hollowpart of the biscuit is filled with chocolate and the like.

However, these types of biscuits can not achieve a fully satisfactory result, in that the biscuits are not easily melted in the mouth and have a rather powdery and dry texture because insoluble gluten derived from the wheat flour is a backbone of the dough.

To solve the foregoing problem, some methods are known in which the dough is blanched in hot water at a high temperature, for example, 90°C or more, or vapor is sprayed onto the dough. However, the foregoing methods include such problems as the hollow shape is easily deformed due to water pressure and vapor pressure, as well as moisture moving into the dough. In addition, after baking, a thin layer of the surface of the product is slightly detached, generally known as a blister. As described above, the foregoing methods for solving the problem need a special facility and processing space and are very difficult to control.

Further, in the biscuit in which gluten is formed to constitute the backbone of the dough, amount of saccharides and taste providing material that can be blended into the dough is limited, in order to maintain the shapability of the dough. For example, when the amount of saccharides and cocoa powder to be blended in making a hollow biscuit having a chocolate flavor are too great, the performance of gluten in keeping the shape of the dough is significantly restricted, and as a result the dough may not stretch well or may sag. As a result, holes may be generated in the process of forming the hollow shape, or the hollow shape may not be maintained until the baking is completed. Therefore, improving the taste and diversifying the flavor of the product has limitations, which may not be adapted for the growing needs of the market.

Another conventionally known method involves a gelatinized dough, made by steam-cooking or steam-kneading cereal flour, such as wheat flour. The dough is the cooled and shaped, and then dried so as to adjust the moisture included therein. The dried dough is finally fried, baked or the like. Examples of which are snacks and rice cracker. Alternatively, it is usual that the dough is gelatinized at a high temperature and under a high pressure, and then extruded and shaped using an extruder, followed by expansion. Further, the dough is dried as necessary. These methods, however, include problems, such as that the obtained snack has a texture different to the texture originally targeted, maintaining the hollow shape may be difficult due to expansion, the complicated process demands an operator's skills and long hours, and a special device is needed.

As specific approaches for solving these problems, the following are proposed.

In JP Patent Gazette No. 1092464 (Publication for Opposition No. 56-35124: Patent Document 3), a dough formed into a noodle shape is steam-heated to be gelatinized or dipped in hot water so as to promote gelatinization of the starch for the purpose of obtaining a noodle-shaped snack that is highly gelatinous (that is, gelatinized). However, the publication fails to recite that the noodle-shaped snack is formed into the hollow shape. Though a baked snack having the hollow stick shape may be made using the method used in the publication, the process for maintaining the hollow shape is complicated and difficult to control according to the method as described earlier, and the noodle-shaped snack obtained by this method does not achieve the desired meltability in the mouth, even though the powdery and dry texture is improved.

In JP Patent Gazette No. 1855924 (Publication for Opposition No. 5-79290: Patent Document 4), a snack-type food product obtained by cooking a cereal flour, including tapioca starch, by a twin-screw extruder is proposed. In JP Patent Gazette No. 2530184 (Patent Document 5), a method for making a snack in which starch is blended with an emulsifier and extruded is proposed. In JP Patent Gazette No. 2558494 (Patent Document 6), an expanded food obtained by gelatinizing a material, including starch, emulsifier and calcium carbonate, using an extruder is proposed. However, for any of the methods proposed in these documents, which are directed to improving the expansion process or simplifying the manufacturing process, large-scale and special equipment is required, and it is difficult to achieve a hollow stick shape with reduced thickness. Further, all of these methods lack novelty in the textures and flavors of the obtained food products.

In Patent No. 1031061 (Publication for Opposition No. 54-34823: Patent Document 7), a cubic rice cracker-like snack is described, which is obtained by adding water to starch and heating the mixture, so as to make a gelatinized fluid, the fluid is blended with wheat flour and baked. However, the method comprises a complicated process and is difficult to control. Further, the dough is not easily dehydrated when heated and therefore, a long period of time is necessary for baking, and the snack thereby obtained develops a large blister and is not even in texture.

In JP Patent Gazette No. 2955264 (Patent Document 8), Japanese Laid-open Publication No. 10-56946 (Patent Document 9), Japanese Laid-open Publication No. 8-38028 (Patent Document 10) and Japanese Laid-open Publication No. 10-191911 (Patent Document 11), a method of making an expanded snack, a bakery mix and a toasted rice cake-like baked food, respectively, are described in which the production process is simplified and special equipment is not demanded. However, the foods obtained according to these methods contain a large amount of moisture and have an elastic texture, and are completely different to a baked snack having the hollow stick shape according to the present invention in terms of the object and effect.

Specifically, a moisture of at least 10 weight % is required in order to obtain an elastic texture. For example, the moisture content in the case of a French loaf is 30 weight %. Reduction of the moisture content of such food products, which results in the loss of such an elastic texture, is not intended. Further, these food products, whose moisture content is difficult to reduce because they cannot be easily cooked, are baked at a low temperature so that they do not become burnt. Therefore, a baked snack having less moisture content (for example, 5 weight % or less) is not suitable for industrial production, due to requiring a long period of time for production. In addition, any dough in the prior art is expanded into a large size, thus the prior art does not intend at all the scope of the present invention, that is a dough which is formed very thin in the hollow stick shape, a form which is maintained after baking. These methods are originally intended for making food such as bread, and the field for such foods is totally different to the field of the baked snack.
- [Patent Document 1]: JP Patent Gazette No. 2894946 (Page 1 and Figs. 1, 2)
- [Patent Document 2]: JP Patent Gazette No. 3295664 (Page 1)
- [Patent Document 3]: Publication for Opposition No. 56-35124 (Page 1)
- [Patent Document 4]: Publication for Opposition No. 5-79290(Page 1)
- [Patent Document 5]: JP Patent Gazette No. 2530184 (Page 1)
- [Patent Document 6]: JP Patent Gazette No. 2558494 (Page 1)
- [Patent Document 7]: Publication for Opposition No. 54-34823 (Page 1)
- [Patent Document 8]: JP Patent Gazette No. 2955264 (Page 1)
- [Patent Document 9]: Japanese Laid-open Publication No. 10-56946 (Page 2)
- [Patent Document 10]: Japanese Laid-open Publication No. 08-38028 (Page 2)
- [Patent Document 11]: Japanese Laid-open Publication No. 10-191911(Page 2)

### DISCLOSURE OF THE INVENTION

### PROBLEMS TO BE SOLVED BY THE INVENTION

The present invention is intended to solve the foregoing problems. An object of the present invention is to provide a baked snack having a hollow stick shape that has a high shapability, can be easily melted in the mouth and has no powdery and dry texture. Further, an object of the present invention is to provide a novel baked snack having a hollow stick shape that can be blended with a large amount of taste providing material, in order to improve the quality of the taste and can be evenly formed with reduced blisters, and further, is suitable for mass production and processing, without employing any special device and complicated process.

### MEANS FOR SOLVING THE PROBLEMS

As a result of diligent studies to solve the aforementioned problems, the present inventors found that a novel baked snack could be made by preparing a dough including an non-gelatinized flour and a gelatinized flour and substantially not including active gluten, and shaping and baking the prepared dough. Based on these findings, the present inventors completed the present invention.

A baked snack of the present invention is a baked snack having a hollow stick shape obtained by baking a dough including non-gelatinized flour and gelatinized flour, wherein the dough does not substantially include active gluten.

In one embodiment, the moisture content of the baked snack is 5 weight % or less.

In one embodiment, the weight ratio of non-gelatinized flour and gelatinized flour can be 40:60 - 95:5.

In one embodiment, the weight ratio can be 50:50 - 80:20.

In one embodiment, the non-gelatinized flour can be derived from wheat.

In one embodiment, the non-gelatinized flour can include a roasted wheat flour.

In one embodiment, the gelatinized flour can include an gelatinized cereal flour.

In one embodiment, the gelatinized flour can include an gelatinized wheat flour.

In one embodiment, the non-gelatinized flour can include roasted wheat flour, and the gelatinized flour can include gelatinized wheat flour.

In one embodiment, the dough can include: 5 to 50 parts by weight of saccharides; 1 to 50 parts by weight of oils and fats; and 0 to100 parts by weight of a taste providing material with respect to the total 100 parts by weight of non-gelatinized flour and gelatinized flour.

In one embodiment, the dough can include: 10 to 30 parts by weight of saccharides; 5 to 20 parts by weight of oils and fats; and 10 to 30 parts by weight of taste providing material with respect to the total 100 parts by weight of non-gelatinized flour and gelatinized flour.

In one embodiment, the taste providing material can include cocoa powder.

In one embodiment, an outer diameter of the baked snack can be 15 mm or less, and an inner diameter thereof can be 40% or more of the outer diameter.

In one embodiment, a thickness of the baked snack can be 2.5 mm or less in at least a part thereof.

In one embodiment, the inside of a hollow stick shape portion of the baked snack can be filled with a filling material.

A method of making the baked snack of the present invention comprises the steps of: mixing raw materials of the baked snack including non-gelatinized flour and gelatinized flour, so as to obtain a mixed dough substantially not including active gluten; extruding the mixed dough via a nozzle into the hollow stick shape, so as to obtain a shaped dough; and baking the shaped dough so as to obtain the baked snack having the hollow stick shape.

In one embodiment, the method of the present invention further comprises a step of injecting a filling material into the inside of the hollow stick shape portion of the baked snack via an open end of the baked snack having the hollow stick shape obtained in the baking step described above.

### EFFECT OF THE INVENTION

As described above, as a result of the diligent studies in view of the disadvantages of conventional baked snacks having the hollow stick shape, the present inventors found that a baked snack, excellent in industrial production efficiency and achieving a favorable texture and flavor, could be made by extruding a dough, substantially not including active gluten obtained by using non-gelatinized flour and gelatinized flour, to form the hollow stick shape. Based on these findings, the present inventors completed the present invention.

The present invention can provide a novel baked snack having a hollow stick shape that can be unprecedentedly easy to melt in the mouth and has no powdery and dry texture, added with a large amount of taste providing material in order to improve the quality of the taste, has a high shapability and can be reliably evenly shaped with reduced blisters and is suitable for mass production and processing without needing any special device and complicated process.

The common knowledge of those skilled in the art in improving the shapability of biscuits is to mix wheat flour into the dough, so as to provide a sufficient amount of gluten. In particular, gluten is indispensable for obtaining a baked snack whose shape, such as the hollow stick shape, is difficult to maintain, because it is necessary to prepare a dough, which is appropriately soft, well stretched and elastic enough to remain in one piece.

In the present invention, it was found that the novel baked snack can be obtained by mixing the mixed flour of non-gelatinized flour and gelatinized flour, with saccharides, oils and fats and a taste providing material as necessary, so that a dough, substantially not including active gluten, is prepared, then, the dough is formed into the hollow stick shape and baked so that the moisture content of the baked snack thus obtained can be 5 weight % or less.

Therefore, the effect exerted by the present invention is a remarkable effect that defies the common sense of those skilled in the art.

### BEST MODE FOR CARRYING OUT THE INVENTION

Hereinafter, the present invention is described in detail.

The term "baked snack" as used in the present application refers to a food, a typical example of which is a biscuit, obtained in such a manner that a dough, which is prepared by mixing flours, such as cereal flour, starch and the like used as main ingredients, with saccharides, oils and fats, a taste providing material, a food additive and water as necessary, is shaped and baked. The baked snack of the present invention preferably contains a moisture content of about 5 weight % or less after the baking process, in order to obtain a crunchy texture and meltability in the mouth. The blend formula for preparing the dough of the baked snack and the method of making the dough of the baked snack are not limited to the so-called Biscuit Kiyaku (the codes of the biscuit), and the flavor of the baked snack is not subject to any limitation. A targeted baked snack can be made in such a manner that, the amounts of saccharides, milk products and the like to be blended are increased when a sweet type snack is desirably made, while amounts of salt, seasonings and the like to be blended are increased when a spicy type snack is desirably made. There is no restriction in such secondary processes, such as filling inside a hollow part of the baked snack of the present invention, with oily or fatty substance such as chocolate, coating the outside of the baked snack with chocolate or coating the baked snack with seasoning oil in order to improve the quality of the taste.

### (Raw Materials of the baked snack)

The baked snack of the present invention can be obtained by forming a dough including a non-gelatinized flour and a gelatinized flour into a hollow stick shape and baking the shaped dough. The dough used in the present invention does not substantially include active gluten.

The "non-gelatinized flour" as used in the present invention refers to cereal flour and starches, which are not gelatinized when mixed with room temperature water. The "non-gelatinized flour" more specifically refers to cereal flour and starches not gelatinized, that is cereal flour and starches having a crystallinity and a birefringency ("Denpun Kagaku Handbook" published by Asakura Shoten on July 20, 1977, Page 35).

In the present specification, the "cereal flour" refers to a product obtained by grinding seeds of cereals.

Non-gelatinized flour used in the present invention does not substantially include active gluten. Examples of non-gelatinized flour include non-gelatinized flour not including gluten and non-gelatinized flour including gluten, wherein the gluten is deactivated. Specifically, non-gelatinized flour is non-gelatinized flour in which active gluten is not formed when mixed with water and kneaded. Active gluten has viscosity and elasticity. In the present invention, active gluten inhibits the decrease in the moisture of the baked snack during baking and consequently causes the texture and the meltability of the obtained baked snack to be inferior. Examples of non-gelatinized flour substantially not including active gluten include, in addition to starches of various types mentioned below, rye flour, buckwheat flour, rice flour, corn flour, foxtail millet flour, millet flour, Job's-tears flour, Japanese barnyard millet flour and the like. Examples of non-gelatinized flour including deactivated gluten but incapable of forming active gluten include a cereal flour, such as a roasted wheat flour and an processed wheat flour in which gluten is deactivated, that is obtained by subjecting a cereal flour which includes active gluten when milled into powder to an artificial physical treatment, such as heat treatment so that the gluten therein is deactivated.

Any cereal flour generally commercially available can be used as the cereal flour included in the non-gelatinized flour. The particle size of cereal flour is generally 0.001 - 1 mm. Examples of cereals used as the raw material of the cereal flour include wheat, rye, corn, buckwheat, rice, foxtail millet, millet, Job's-tears, Japanese barnyard millet and the like. Examples of the cereal flour include the wheat flour, rye flour, buckwheat flour, rice flour, corn flour, foxtail millet flour, millet flour, Job's-tears flour, Japanese barnyard millet flour and the like. One or more of the wheat flour, rice flour, corn flour and the like can be used as the cereal flour, and these can be widely used in various manners depending on a desired flavor of the final product. A method of producing cereal flour is well-known to those skilled in the art.

Cereal flour eliminates the intrinsic smell of the starch in the case of using starches and gives a flavor of the cereal, which can contribute to the improvement of the flavor of the obtained baked snack. When taste providing materials are added as the accessory ingredient, if the taste providing material having a strong flavor is used, the smell of the starch may not be so bothering even in the absence of the cereal flour. However, cereal flour may be used as necessary.

When an oily or fatty confectionary, such as chocolate, in particular, is combined with the obtained baked snack, for example, when the baked snack is filled with chocolate, use of wheat flour improves the flavor in comparison to using starches. In that case, roasted wheat flour or processed wheat flour, in which gluten is deactivated, is more preferably used as wheat flour, and roasted wheat flour is further preferably used.

The "roasted wheat flour" is obtained by retaining wheat flour whose moisture level is maintained at 5 weight % or more at 90 - 110°C for 10 - 50 minutes. A method of producing the roasted wheat flour is described in detail in Publication for Opposition No. 3-55091. Processed wheat flour whose gluten is deactivated can be produced, for example, by means of a conventionally known wet heat treatment using vapor or a dry heat treatment in which a wheat flour is heated at 80 - 120°C for two - ten hours. In roasted wheat flour and processed wheat flour whose gluten is deactivated, the gluten in the wheat flour is deactivated due to heat treatment. Therefore, roasted wheat flour and processed wheat flour whose gluten is deactivated are effective in reducing the powdery and dry texture and improving the shapability and the meltability in the mouth in comparison to the case where ordinary wheat flour is used, because the viscosity resulting from active gluten is not generated when water is added thereto.

As specific examples of roasted wheat flour can be mentioned, a series of products called "Roasted Flour" produced by Nis shin Flour Milling Inc. For example, a product called "Roasted Flour RD" is available.

In the present specification, the "starches" may not be limited to, as a material, 100% pure starch but may include a small amount of impurities. Provided that the content of impurities included in the starch is preferably about 10 weight % or less, more preferably about 5 % or less and even more preferably about 1 % or less. Examples of starches which may be the non-gelatinized flour, include untreated starch and modified starch of various types. When starch is used in the present invention, there is no particular restriction as to the amount of starch. However, the amount of starch is preferably about 80 weight % or less, more preferably about 60 weight % or less, even more preferably about 40 weight % or less, and particularly preferably about 20 weight % or less of the total 100 parts by weight of non-gelatinized flour and gelatinized flour. When the amount of starch is excessive, the flavor of the baked snack is easily degraded. Though there is no particular lower limit to the amount of the starch, it may be about 0.1 weight % or more or about 1 weight % or more as necessary.

The "untreated starch" refers to a naturally generated starch which is not subjected to any treatment other than necessary treatments for separating starch from other ingredients (for example, protein, lipid and the like) coexisting in the natural state. Any starch generally commercially available can be used as untreated starch. Examples of untreated starch include underground starches such as potato starch, tapioca starch, sweet potato starch and kudzu starch, and above ground starches such as corn starch, wheat starch and rice starch(for example, glutinous rice starch and nonglutinous rice starch).

Any of cross-linked starch, esterified starch, etherified starch, soluble starch, bleached starch and the like, which are conventionally known, can be used as the modified starch which is included in non-gelatinized starch. Various treatments to obtain a modified starch such as a cross-linked treatment, esterifying treatment, etherifying treatment, solubilizing treatment and bleaching treatment and the like can be optionally combined. As long as the targeted effect of the present invention is obtained, any modified starch obtained by combining these various treatments can be used in the present invention.

The cross-linked starch refers to a starch derivative in which a multifunctional group is bonded to two or more hydroxyl groups in the starch so that they are cross-linked within a starch molecule or between starch molecules. Examples of cross-linking agents include phosphorous oxychloride, trimethaphosphoric acid, acrolein, epichlorohydrine, and the like. Any cross-linked starch produced in a normal method can be used.

The esterified starch refers to a starch in which a functional group is added to a starch by means of an ester linkage. The etherified starch refers to a starch in which a functional group is added to the starch by means of the ether linkage. Examples of esterified starch include acetyl starch, phosphoric acid starch, succinic acid starch, carboxymethyl starch, acetic acid starch, nitric acid starch and xanthogenaic acid starch. Examples of etherified starch include hydroxypropyl starch, hydroxyethyl starch and carboxyethyl starch. The methods of producing esterified starch and etherified starch are well-known to those skilled in the art.

The "gelatinized flour" as used in the present invention refers to cereal flour and starches gelatinized when mixed with room temperature water. More specifically, the "gelatinized flour" refers to gelatinized cereal flour and starches, and the gelatinized refers to a state where the starch has lost crystallinity and birefringency ("Denpun Kagaku Handbook" published by Asakura Shoten on July 20, 1977, Page 35). Any ordinary cereal flours and starches are not gelatinized when mixed with room temperature water. The gelatinized flour is obtained in such a manner that the ordinary cereal flour or starches are mixed with water and heated or subjected to pressurizing and heating treatments using the extruder, to be gelatinous (i.e., gelatinized) and thereafter dried by means of spray drying, drum drying or the like. The method of producing gelatinized flour is known to those skilled in the art. The gelatinized flour does not substantially include active gluten because of heating during the production process. Examples of cereal flour used as the raw material of gelatinized flour include the any of above-mentioned cereal flours such as the wheat flour and rice flour. Examples of the starches used as the material of gelatinized flour include the above-mentioned untreated starch, various types of modified starches such as cross-linked starch, esterified starch and etherified starch, and dextrin.

Gelatinized wheat flour is preferably used as the gelatinized flour. The "gelatinized wheat flour" refers to wheat flour subjected to an pregelatinizing treatment. The pregelatinizing treatment can be performed by means of a conventionally known method. For example, a method is known, in which a dough obtained by adding water to wheat flour is extruded using an extruder while being heated and pressurized, and immediately cooled, dried, and then ground. As a specific industrial production process, a process is known, in which a product is obtained by serially performing an addition of water, mixing and kneading step, a heating and pressurizing step, a preliminary drying step, a drying step, an aging step, a grinding step, a sifting step and a gauging and wrapping step. Gelatinized wheat flour, which is different to gelatinized starch from which any ingredient other than starch is separated, is the processed cereal flour capable of contributing to the improvement of flavor by eliminating the intrinsic smell of the starch and adding the flavor of the cereal in the same manner as the above-mentioned roasted wheat flour. In particular, when an oily or fatty confectionary such as chocolate are combined with the obtained baked snack, for example, when the baked snack is filled with chocolate, gelatinized wheat flour improves the flavor in comparison to the use of starch.

Specific examples of gelatinized wheat flour include a series of products called "α-Flour" produced by Nisshin Flour Milling Inc. For example, a product called "α-Flour P" is available.

There is no particular restriction to the weight ratio between non-gelatinized flour and gelatinized flour used in the present invention, however, the weight ratio is typically 40:60 - 95:5 and preferably 50:50 - 80:20. When the blended amount of non-gelatinized flour is too small, problems may occur, such as the dough becoming too expanded resulting in the loss of a solid texture, the product has a graunching and glassy texture, and voids and blisters are generated resulting in a failure to obtain the desired shape. On the contrary, when the blended amount of non-gelatinized flour is too great, the dough may not be elastic enough to remain in one piece or may not stretch well, making it difficult to form the dough into the desired shape, or the meltability may be reduced, powdery and dry texture may be generated, or the dough may not be sufficiently expanded.

The total weight of non-gelatinized flour and gelatinized flour used in the present invention is preferably about 20 % or more, more preferably about 30 % or more and even more preferably about 40 % or more of the total weight of the dough (including water).

The dough of the baked snack of the present invention may include saccharides, oils and fats and taste providing material in addition to non-gelatinized flour and the gelatinized flour.

The "saccharides" as used in the present invention refer to monosaccharide, disaccharide, oligosaccharide, sugar alcohol, starch syrup, degraded starch and water-soluble dietary fiber. Any saccharides which are commercially available in the art can be used as saccharides. Examples of saccharides include sugar, isomerized sugar, glucose, maltose, lactose, trehalose, maltitol, Palatinit; degraded starch such as dextrin and starch syrup; and dietary fiber such as polydextrose. In order to adjust sweetness degree, texture, baked color, shape accompanied by the expanding degree of the desired baked snack, one, or two or more saccharides can be selectively used as necessary. These saccharides are not necessarily used when a spicy flavored snack is desirably obtained. By selectively using saccharides having a low sweetness degree content, the texture and the expanding degree of the obtained baked snack can be adjusted.

The amount of blended saccharides is typically 5 - 50 parts by weight and preferably 10 - 30 parts by weight with respect to the total 100 parts by weight of the non-gelatinized flour and the gelatinized flour. When the blended amount of saccharides is too much, the dough may not be elastic enough to remain in one piece or may not sufficiently stretch thereby deteriorating the shapability thereof, or the shape of the dough may sag after the baking process. When the blended amount of saccharides is to small, a powdery and dry texture may be obtained, the dough may not be baked fast, thereby requiring a long period of time for the baking process, or the dough may not be attached to a band or the like well during baking, which may result in a deformed shape such as warping.

The "oils and fats" as used in the present invention refer to vegetable oils and fats, animal oils and fats and processed products thereof. Any oils and fats commercially available in the art can be used as oils and fats. Examples of oils and fats include a variety of vegetable and animal oils and fats such as shortening, margarine, butter, lard, corn oil, olive oil, cotton oil, canola oil, soybean oil, coconut oil, sesame oil, sunflower oil, safflower oil, salad oil as well as powder type oil and fat. In order to improve the flavor and the meltability in the mouth of the obtained baked snack, one, or two or more oils and fats can be selectively used as necessary. These oils and fats are effective for providing a snack flavor, western taste or flavor of oils and fats, and further improving the meltability in the mouth.

The amount of oils and fats to be blended is typically 1 - 50 parts by weight and preferably 5 - 20 parts by weight with respect to the total 100 parts by weight of non-gelatinized flour and gelatinized flour. When oils and fats are overly added, the dough may be too loose resulting in deteriorated shapability or the shape of the dough may sag. When the amount of oils and fats to be blended is too small, the dough may not be made into one piece or may not stretch well, thereby deteriorating the shapability, and the good meltability in the mouth may not be obtained, the powdery and dry texture may be obtained, or the dough may not be baked fast, thereby requiring a longer period of time to be baked. In general, the texture of the obtained baked snack is lighter and crispier as the amount of fats and oils is increased. The amount of oils and fats to be blended may be set depending on the desired texture of the obtained baked snack.

The "taste providing material" as used in the present invention refer to food materials added in order to provide a specific taste for the obtained baked snack. Examples of taste providing material include nuts and seeds such as peanut, almond, macadamia nut, cashew nut and chestnut; beans such as azuki-bean, pea and soybean; fish such as shrimp, crab, salmon, scallop and cod roe; livestock products such as sausage, ham, bacon and minced meat; eggs such as raw egg, egg white and egg yolk; dairy products such as milk, fresh cream, condensed milk, powdered whole milk, skimmed milk powder, cheese and yoghurt; vegetables such as carrot, tomato and onion; fruits such as strawberry, orange, raisin, apple, kiwifruit, pineapple, Japanese plum and banana; fruit body such as shiitake and mushroom; algae such as green laver, kelp and seaweed; beverages such as coffee, black tea, cocoa, beer and wine; seasonings and spices such as salt, consommé, soy sauce, sauce, curry powder, pepper and cinnamon. The form of the taste providing material may be in any form such as raw, dried, pasted, pureed or powdered. One, or two or more taste providing materials may be selectively used as necessary in order to provide the desired flavor to the baked snack.

The amount of the taste providing material to be blended is typically 0 - 100 parts by weight and preferably 10 - 30 parts by weight with respect to the total 100 parts by weight of non-gelatinized flour and gelatinized flour. When the blended amount of taste providing material is too great, the dough may not be made into one piece or may not stretch well and thereby may not be formed into the desired shape, the dough may not be expanded enough, or the meltability in the mouth may be reduced. When the blended amount of taste providing material is too small, the powdery and dry texture may be obtained.

Cocoa powder is preferably used as the taste providing material. The "cocoa powder" as used in the present invention is obtained by excluding a part of cocoa butter from cacao nib or cacao mass by means of compression or the like and grinding the excluded materials. Typical weight ratios of the cocoa butter and the moisture in the cocoa powder are respectively 8% or more and 7% or less (see Item 11 (1) of Article 2, "Chocolate-rui no hyoji ni kansuru kousei kyousou kiyaku (Code of Fair Competition on the indications of chocolates)") . The method of producing the cocoa powder is known to those skilled in the art. Any cocoa powder commercially available in the art can be used as cocoa powder. Cocoa powder can serve to improve the flavor of the baked snack by eliminating powdery and dry texture and adding a cocoa flavor to the baked snack. Especially, when oily or fatty confectionary such as chocolate are combined with the obtained baked snack, for example when the baked snack is filled with chocolate, the cocoa powder improves the baked snack in terms of the taste thereof, since it can prevent the baked snack from being too sweet when added as the taste providing material.

Other than the foregoing materials, an emulsifier, expanding agent, acidifier such as citric acid, seasoning such as amino acid, sweetener such as aspartame or additive such as a flavor may be added without any restriction in the same manner as in a conventional biscuit. For example, various types of the emulsifiers such as lecithin, sucrose fatty acid ester and glycerin fatty acid ester may be used. In order to adjust the texture of the obtained baked snack, suppress the separation of oils and fats in forming the dough into the shape and the like, one, or two or more additives may be selectively used as necessary. Though there may be a some difference depending on the type and Hydrophile-Lipophile Balance (HLB) of the used emulsifier, the texture of the obtained baked snack is generally lighter and crispier as the amount of the added emulsifier is increased. Therefore, the amount of the emulsifier may be set, for example, when the texture of the baked snack feels too hard with a graunching texture in order to obtain the desired texture. The amount of the emulsifier to be blended is typically 0 - 1 part by weight, and preferably 0 . 001 - 0.5 part by weight with respect to the total 100 parts by weight of non-gelatinized flour and gelatinized flour.

Various types of expanding agents such as baking soda, ammonium bicarbonate, baking powder and the like can be used as an expanding agent. In order to adjust the expanding degree and texture of the obtained baked snack, one, or two or more expanding agents may be selectively used as necessary. In the case of the baked snack of the present invention, an expanding agent may not be necessarily used. However, it may be added by an amount optionally set depending on the desired expanding degree and texture, for example, when the larger expanding degree is desired or the lighter texture is desired. The amount of the expanding agent to be blended is typically 0 - 3 parts by weight and preferably 0.001 - 1 part by weight with respect to the total 100 parts by weight of non-gelatinized flour and gelatinized flour.

In order to keep abreast of the health consciousness in recent years, ingredients for nutrient functions and physiological function such as various vitamins, minerals, dietary fibers, peptides and polyphenols may be added.

An appropriate amount of water is added to the foregoing raw materials so that the dough is made. The amount of blended water refers to the amount that is added independent from the moisture content resulting from the taste providing material in order to produce dough with an appropriate state. That is, when a large amount of taste providing material having a relatively large amount of moisture, such as milk or egg is blended, it might be unnecessary to additionally blend water. When a large amount of taste providing material having a relatively small amount of moisture such as cheese powder or cocoa powder is blended, the amount of water separately blended is increased. When water is overly blended, the dough may become gooey and thereby shapability may be decreased, the dough may become too loose in the baking, the dough may be too expanded, or the desired shape or texture may not be obtained. When the amount of water to be blended is too small, the dough may become too dry to be made into one piece or may not be stretched well enough to be formed into the shape, the dough may not be sufficiently expanded, the meltability in the mouth may be reduced, the powdery and dry texture may be obtained, or the dough may be subjected to an excessive load in the extruder and thereby be damaged.

The dough used in the present invention does not substantially include active gluten. "Does not substantially include active gluten" means that the amount of active gluten is preferably about 5 weight % or less, more preferably about 3 weight % or less, even more preferably about 1 weight % or less, especially preferably about 0.5 weight % or less, and more specifically preferably about 0.1 weight % or less of the weight of the entire dough (including water). In the present invention, a too large amount of active gluten may inhibit the decrease of the moisture in the baked snack during baking or lead to the texture of the obtained baked snack to be heavy resulting in the reduced meltability in the mouth. Therefore, when wheat flour containing the active gluten is used for the dough, the amount of wheat flour containing the active gluten to be blended is preferably about 50 weight % or less, more preferably about 30 weight % or less, even more preferably about 10 weight % or less, especially preferably about 5 weight % or less, and more especially preferably about 1 weight % or less of the total 100 parts by weight of non-gelatinized flour and gelatinized flour.

The "active gluten" refers to a gluten which is an ingredient which becomes viscoelastic when kneaded with water and is not changed by heat or the like. Gluten does not exist in any cereals other than wheat. The wheat flour includes about 7 - 14% of wheat protein. Gluten is mainly comprised of gliadin and glutenin, and the sum of the gliadin and glutenin constitutes about 80 - 88% of the wheat protein. The amount of active gluten included in the wheat flour can be measured by means of a method known in the art. Specifically, for example, a dough is obtained by adding water to the wheat flour and mixing, washed with a large amount of water so as to remove any starch and soluble component, a gummy material is obtained. Then, a dry weight of the obtained gummy material is measured so that the amount of the active gluten is measured. As a alternative method, a method is known in which wheat flour is successively extracted with water, brine, 70% ethanol and 0.1 N acetic acid so that gliadin and glutenin which are the components of gluten can be separated therefrom. The amount of active gluten can be thus measured by using this method.

Please note that because it would be complicated to measure and further adjust the amount of active gluten after the dough is produced, it is preferable to control the amount of active gluten in the dough by adjusting the amount of wheat flour to be blended, as described above.

### (Production of Baked snack)

The baked snack of the present invention is produced by a step in which the raw materials of the baked snack including non-gelatinized flour and gelatinized flour are mixed so that a mixed dough, which substantially does not include active gluten is obtained, a step in which the mixed dough is extruded from the nozzle of an extruder and formed into the hollow stick shape so that the shaped dough is obtained and a step in which the shaped dough is baked so that the baked snack having the hollow stick shape is obtained.

First, the raw materials of the baked snack including non-gelatinized flour and gelatinized flour are mixed so that a mixed dough, which substantially does not include active gluten is obtained. The "mixed dough" as used in the present invention refers to a mixture in which all of the raw materials of the baked snack are evenly mixed. The raw materials selected from saccharides, oils and fats, taste providing materials, emulsifiers, expanding agents and water are added to non-gelatinized flour and gelatinized flour as necessary. Any mixer regardless of shape, whether a vertical type or a horizontal type, used in a conventional process of producing bread and snacks may be used for the mixing of the dough. Any mixing method may be used as long as the raw materials are substantially evenly mixed. There is no restriction to which order the raw materials are mixed, and the so-called all-in-mix method, in which all of the raw materials are mixed, may be used. Any particular raw material may be added while the other raw materials are being mixed. When the used fats and oils are solid at room temperature, such as solid shortening, it may be necessary to first heat and melt the solid-state material before mixing. In that case, if oils and fats of that type are added after the raw material flours are mixed with water, it may be difficult for the raw material flours to be mixed with the oils and fats due to a difference in viscosity. Therefore, oils and fats may be roughly mixed with the raw material flours before water is added, or the all-in-mix method is desired. The mixing may only take a short period of time, as little as about 1 - 10 minutes, and does not require temperature adjustment, steaming/boiling, time for letting the mixed dough stand, and the like. By adjusting the period of the mixing, the texture can be adjusted to any desired level because the texture of the baked snack after baking tends to be generally lighter and crispier as the mixing time is increased. When there is no particular requirement, the raw materials may be mixed in the shortest mixing period of time in which the raw materials are evenly mixed.

The mixed dough thus obtained is formed into the hollow stick shape in an optional method. Specifically, for example, a method in which the mixed dough may be extruded from a ring-shape nozzle of an extruder and formed into the hollow stick shape and the like may be employed.

When the dough is baked in the bar shape, the obtained baked snack is easy to eat and the dough is easy to bake, and can easily decrease the moisture included therein and does not easily suffer from shaping stress in comparison to any other complicated shape. Further, the dough can be prevented from any heavy damage (if the dough is heavily damaged, the shape of the obtained baked snack may sag after the forming and baking process, or the texture thereof may be deteriorated). Therefore, the mixed dough is preferably formed into a bar shape.

By using the blend for the present baked snack, the dough can be extruded from a nozzle of an extruder having a small difference between an outer diameter and an inner diameter thereof. Therefore, the baked snack having a small difference between an outer diameter and an inner diameter thereof can be easily produced.

Specifically, the obtained dough can be continuously extruded, for example, using the extruder and formed into the hollow stick shape. For example, when the product having a cylindrical shape is formed, a method in which the mixed dough can be extruded via the ring-shape nozzle and formed into the hollow stick shape can be employed.

In this case, a nozzle having about same size as that of the product after baking may be used, or a nozzle having a size smaller than that of the product may be used.

The shaped dough having the hollow stick shape immediately after being extruded from the ring-shape nozzle generally has substantially the same size as the outer diameter and inner diameter of the nozzle. The sizes of the outer diameter and inner diameter of the shaped dough can be adjusted to be smaller than those of the nozzle by stretching the extruded shaped dough by a conveyer, a band of an oven or the like. By stretching the extruded shaped dough so as to reduce the sizes thereof, an opening area of the nozzle of the extruder can be enlarged, as a result of which a shaping process is reduced and the dough can be shaped without any heavy damage. The sizes of the outer diameter and inner diameter of the baked snack after baking are generally substantially equal to or larger than those of the shaped dough. Therefore, the sizes after the baking are substantially equal to or larger than the sizes of the nozzle of the extruder when the shaped dough is not stretched enough. On the contrary, the sizes of the baked snack can be smaller than those of the nozzle of the extruder when the shaped dough is stretched to a large extent. Those skilled in the art can easily design the required shape of the nozzle in order to obtain the desired shape of the final product in view of the foregoing aspects.

When the dough is formed in the hollow stick shape, the dough is preferably shaped so that the outer diameter of the baked snack after baking is preferably 2 - 15 mm, more preferably 3 - 10 mm, and even more preferably 4 - 8 mm. The dough is preferably shaped so that the weight of the obtained baked snack after the baking is preferably 0.5 - 5 g, more preferably 0.5 - 3 g, and even more preferably 0.5 - 2 g per 10 cm. The dough formed in the hollow stick shape can be cut in an optional length before or after the baking process.

The shaped dough having the hollow stick shape thus obtained can be subjected to a water treatment or an alkali treatment as necessary. The baked snack of the present invention does not particularly demand a water treatment and an alkaline treatment, however, the shaped dough may be subjected thereto, as required. A water treatment refers to water being sprayed on the shaped dough or dipping the shaped dough in water. An alkali treatment refers to an alkaline fluid being sprayed on the shaped dough or dipping the shaped dough in the alkaline fluid. In these cases, the water and alkaline fluid may be set to optional temperatures. Specifically, an alkaline salt aqueous solution (in general, 0.1 % to 3.0 % aqueous solution) compatible with food, such as sodium hydrate or sodium carbonate, can be used as the alkaline fluid.

As effects obtainedwhen the shaped dough is subjected to the water treatment or the alkaline treatment, the obtained baked snack becomes more expanded, the dough is more adhered to the belt of the oven so that the warping of the dough is prevented, or a fragrant flavor obtained by the alkaline fluid is provided. Whereas it is desirable to adjust the conditions for the treatments so that the shape of the shaped dough is not changed due to the water pressure or moisture shift.

The shape that the baked snack of the present invention can adopt is any shape as long as the hollow stick shape is obtained. The shape is preferably a shape whose sectional outer periphery and inner periphery are circular, that is a cylindrical shape, or the shape may be a shape whose sectional outer periphery and inner periphery are of a regular polygon. In one of the embodiments, a shape whose sectional outer periphery and inner periphery are square may be adopted. Further, shapes whose sectional outer periphery and inner periphery are respectively regular square, rectangular, rhombic or trapezoidal may be adopted.

Needless to say the terms "polygon", "corner" or the like as used in the present specification, includes a corner part whose edge is rounded according to an industrially practical manner, so called "R-formed" corner part.

In one of the embodiments, the sectional outer periphery and the inner periphery may respectively have different shapes. For example, the shape of the outer periphery may be polygonal, while the shape of the inner periphery may be circular.

Furthermore, the baked snack of the invention may be provided with unevenness at the sectional outer periphery as necessary.

The outer diameter of the baked snack of the present invention is preferably 2 - 15 mm, more preferably 3 - 10 mm, and even more preferably 4 - 8 mm. When the outer diameter is too large, the baked snack is not easy to eat. When the outer diameter is too small, on the contrary, it easily becomes difficult to accommodate enough of the taste providing materials to obtain a satisfactory taste sensation.

Regarding a ratio of the outer diameter to the inner diameter, the inner diameter is preferably 30 - 95% of the outer diameter, more preferably 40 - 90%, and even more preferably 50 - 80%.

Please note that the "outer diameter" as used in the present specification refers to a maximum diameter of the stick-shaped baked snack in a section. For example, when the section of the baked snack is cylindrical in shape, the outer diameter is the diameter of the circle in the section. When the section of the baked snack is elliptical in shape, the outer diameter is the longer diameter of the ellipse.

A thickness of the baked snack of the present invention is preferably 0.3 - 4 mm, more preferably 0.5 - 3 mm, even more preferably 0.8 - 2.5 mm, and especially preferably 1.0 - 2.0 mm. When the thickness is too small, the baked snack is likely to have reduced strength. When the thickness is too great, on the contrary, the relative volume of the hollow part of the baked snack is inevitably reduced, as such it easily becomes difficult to accommodate enough taste providing material to obtain the satisfactory taste sensation.

The shape of the baked snack of the present invention may be even in thickness or may be uneven in thickness. Specifically, for example, the shape may include some thick portions and thin portions.

In the case of a shape having uneven thickness, a difference between the thickest portion and the thinnest portion is preferably 3 mm or less, more preferably 2 mm or less, and even more preferably 1.5 mm or less. When the difference between the thickest portion and the thinnest portion is too great, it easily becomes difficult to evenly bake the product.

The term "thickness" recited in the present specification refers to the thickness of the baked snack having the hollow stick shape in a section. More specifically, for example, the thickness refers to a difference between an outer peripheral radius and an inner peripheral radius in the section, when the sectional shape of the baked snack is cylindrical.

A length of the baked snack may be any length, and preferably 3 - 30 cm, more preferably 5 - 20 cm, and even more preferably 10 - 15 cm. When the length is too great, the baked snack is easy to break, and it easily becomes inconvenient to carry or store the product. When the length is too small, it easily becomes difficult to hold the baked snack in hand and eat it.

The shaped dough is baked under any baking conditions and any method known in the art. For example, any of a fixed oven, a continuous oven, a direct oven, a hot-air circulating oven and the like can be used for baking. The shaped dough can be baked using any of a steel belt, heavy mesh, light mesh or the like as necessary. The length of time spent on the baking process is different depending on the size of the shaped dough as in a conventional biscuit, and is generally 3 - 30 minutes in the range of 120 - 300°C. When a large amount of moisture remains in the baked snack after the baking, the texture of the baked snack may be too gooey, the meltability in the mouth is reduced, and the texture becomes powdery and dry. Therefore, it is important to decrease the moisture to such an extent that the product is not burnt.

The term "moisture content" as used in the present specification refers to a ratio of the moisture included in the baked snack relative to the total weight of the baked snack. For example, when moisture of 1g is included in the baked snack of 100g, the moisture content of the baked snack is 1 weight %. The method of measuring the moisture content is known to those skilled in the art. For example, an infrared moisture meter can be used to measure the weight of the ground baked snack, the ground baked snack can be retained for ten minutes at 105°C, and the weight of the baked snack after being retained for ten minutes can be measured and compared to the weight before retention so that the moisture content can be determined based on a reduction in the weight obtained after retention for 10 minutes. The moisture content in the baked snack immediately after baking is preferably 5 weight % or less, more preferably 3 weight % or less, and even more preferably 2 weight % or less, and particularly preferably 1 weight % or less. When the moisture content is excessively included in the baked snack immediately after baking, the texture of the obtained baked snack may be too gooey, or the meltability in the mouth may be reduced. Further, a phenomenon in which the baked snack may fall into pieces, which is generally called "checking" may be occurred.

Furthermore, after baking, the baked snack may absorb moisture from the air. When the moisture level in the baked snack after absorbing moisture from the air is excessive, the texture of the baked snack may feel wet. Therefore, the baked snack after baking is preferably preserved in such a manner that it is difficult for the baked snack to absorb moisture from the air. For example, the baked snack after baking is preferably sealed and preserved. Furthermore, when sealed and preserved, the baked snack may be preserved with an absorbent or may be preserved in a sealed container filled with inactive gas (for example, nitrogen) . However, the baked snack of the present invention may be preserved in an open container as long as the baked snack does not absorb an excessive amount of moisture.

In the present specification, the moisture content in the baked snack when eaten is referred to as the moisture content of the baked snack. When the baked snack is eaten immediately after it is baked, the moisture content in the baked snack immediately after baking is referred to as the moisture content of the baked snack. When the baked snack is eaten after being preserved for a certain period of time, the moisture content in the baked snack eaten after being preserved, by means of various methods described above, is referred to as the moisture content of the baked snack.

In the baked snack having the hollow stick shape thus obtained, a filling material can be injected into the hollow part. The "filing material" as used in the present invention refers to a food material that can be injected into the hollow part of the obtained baked snack having the hollow stick shape. The filling material preferably adds a specific flavor. Specific examples of filling materials include cream, chocolate, mayonnaise, jam, butter, curry and the like. These filling materials can be injected according to any method known to those skilled in the art. For example, there is a method in which the filling material is prepared so as to have a certain viscosity and is injected via one opening end of the baked snack having the hollow stick shape horizontally placed until the filling material sufficiently reaches another end thereof.

Then, the product injected with the filling material which is usually eaten in the viscous state such as cream, mayonnaise, jam or the like is completed.

On the other hand, when the filling material that is usually eaten in the solidified state, the filling material can be solidified by a method such as cooling and drying, so that the desired baked snack injected with the filling material can be obtained.

Further, the baked snack can be coated with an oily or fatty substance, such as chocolate or a seasoning oil, according to a condition and a method known to those skilled in the art. The baked snack can be coated with an oily or fatty substance or seasoning oil, by a conventional method. For example, one end of the baked snack can be sandwiched with a clip or the like and another end thereof can be dipped in the oil and fat product pooled in a container so that the baked snack is coated. Alternatively, the baked snack can be coated with chocolate according to the enrobing method, in which chocolate is dropped like a curtain and the baked snack disposed on a conveyer travels therebelow. Alternatively, the baked snack is disposed in a mold with the oil and fat product to be thereby coated therewith. Coating with seasoning oil is performed, for example, by spraying the seasoning oil on the baked snack, and the baked snack is then rotated using a tumbler or the like so that the baked snack can be evenly coated with the seasoning oil as necessary. A type and a thickness of the layer of oily or fatty substance to be used for coating the baked snack can be optionally selected as necessary. When the baked snack is coated with an oily or fatty substance, the combination of the baked snack and the oily or fatty substance are combined so as to provide a composite snack having a bettered taste. The coating of the baked snack with the seasoning oil also improves the meltability in the mouth.

The baked snack thus obtained easily melts in the mouth and has no powdery and dry texture. Further, the quality of the taste can be improved by increasing the amount of taste providing material as necessary, and the baked snack can be evenly shaped with reduced blistering and is suitable for the mass production and processing. Further, filling material can be injected into the hollow part of the baked snack as necessary so that the composite snack with improved taste can be obtained.

In one of the embodiments, the moisture content in the baked snack of the present invention is as little as 5 weight % or less, which enables the quality of the product to be maintained for a long period of time, similar to a conventional biscuit.

### (Mechanism)

The present invention offers remarkable effects which could not have been anticipated from the conventional technology as described hereinafter. Although not wishing to be bound by theory, the mechanism presumed from the result of the diligent study implemented by the inventors of the present invention is described below. Such a presumed mechanism is described only in order to better understand the present invention. Needles to say the scope of the present invention is not limited by the presumed mechanism.

In order to produce the baked snack having the hollow stick shape, it is necessary for the mixed dough to physically be appropriately soft, stretchable, and elastic enough to remain in one piece during extruding and shaping. Further, once the dough is formed into the hollow stick shape, it is necessary to maintain the shape during and after the baking process.

In the case of making the baked snack made from a dough including active gluten in which neither non-gelatinized flour nor gelatinized flour are present, that is the conventional baked snack, the gluten is formed through the kneading process, which constitutes the backbone of the dough. However, when the dough is extruded and thereby shaped with an extruder, a screw rotation for extruding and a pressure and a temperature increase generated by the rotation in the extruder easily permits the dough to become overly mixed. When the dough is overly mixed, the gluten is close to a heavily damaged state, generally called "breakdown". When the dough thus damaged is extruded and formed into the hollow stick shape, the obtained shape cannot be thereafter maintained. When the thickness is small, in particular, the phenomenon is even more pronounced.

Due to such a mechanism, it is thought that dough including neither gelatinized flour nor gelatinized wheat flour, particularly when the thickness is small, is inferior in maintaining the shape after the dough is formed into the hollow stick shape. Further, when a taste providing material such as cocoa powder is added in a large amount to the conventional baked snack, the formation of gluten may be inhibited or the dough is not stretched enough, as a result of which the dough may be broken during the shaping or the hollow stick shape may not be maintained. As a possible approach for dealing with these problems, increasing the ratio of strong wheat flour so that an amount of the formed gluten constituting the backbone is increased and the shapability is improved is thought necessary. However, there is a limitation to doing so, because the protein included in the wheat flour is about 14% at most as described earlier, and about 80 - 88% of the protein is gluten (that is, gluten is merely about 12 - 13% of the wheat flour). In addition, in order to mix a dough in which gluten is sufficiently formed and prepared in an appropriate highly stretchable state, it is indispensable to precisely control the production conditions, which requires the full attention to the operator. Further, the gluten itself is water-insoluble, therefore reducing the meltability in the mouth or causing the texture to be heavy is a possibility.

Further, the gelatinized degree of starch in the conventional baked snack is quite low, which easily results in reduced meltability in the mouth, and a powdery and dry texture of the baked snack itself.

In contrast, neither non-gelatinized flour nor gelatinized flour used in the present invention substantially include active gluten, wherein the function of gluten is not present. Gelatinized flour is gelatinized when room temperature water is added thereto, thereby generating viscosity. Therefore, gelatinized flour forms the backbone of the dough in a manner different to gluten derived from protein. The backbone of the dough generated by gelatinization, which is formed simply by mixing the dough with water in a short period of time, can be more easily controlled in comparison to the formation of gluten. The backbone of the dough obtained by gelatinization shows a more stable viscosity than gluten, and the viscosity is difficult to deteriorate even with intense agitation and heating. Therefore, the dough is more capable of maintaining its shape after the dough is extruded and thereby formed into the hollow stick shape. In other words, the dough is excellent in its shape maintaining performance. Further, when gelatinized wheat flour is used as the gelatinized flour, the viscosity is even more difficult to deteriorate (details of the mechanism are unclear, however, it can be considered that a possible factor is the influence of the deactivated wheat protein). In addition, by increasing the ratio of gelatinized flour, the degree of the viscosity of the dough can be optionally adjusted. Therefore, the obtained shape can be maintained even when a taste providing material such as cocoa powder is blended by a considerable amount. Further, the favorable meltability in the mouth and lack of powdery and dry texture can be obtained because the backbone of the dough generated by gelatinization is directly linked to the degree of the pregelatinization of the baked snack.

In this manner, according to the present invention, it is considered that the shape maintaining performance of the dough after the shaping and the baking can be easily improved while the meltability in the mouth and the taste are easily improved at the same time in comparison to the conventional baked snack.

Hereinafter, the present invention is specifically described referring to EXAMPLES, however, the scope of the present invention is not limited thereto.

### [EXAMPLES]

In the following examples, the "Roasted Flour RD" by Nisshin Flour Milling Inc. was used as the roasted wheat flour. The "α-flour P" by Nisshin Flour Milling Inc. was used as the gelatinized wheat flour. Further, the following trade name products purchased from the locations below were used as the raw materials: sugar, commercially available soft white sugar; cocoa powder, commercially available product containing 21% oil; sweetened condensed milk, commercially available product; salt, commercially available product; vanilla, commercially available product; shortening, vegetable type shortening, commercially available product; baking soda, commercially available product; strong wheat flour, "Kameriya" by Nisshin Flour Milling Inc.; weak wheat flour, "Flower" by Nisshin Flour Milling Inc.; and enzyme, protease, commercially available product.

### (Example 1)

Roasted wheat flour (60 parts by weight) was used as the non-gelatinized flour, and 40 parts by weight of the gelatinized wheat flour was used as the gelatinized flour. The total weight of the non-gelatinized flour and the gelatinized flour was 100 parts by weight. Sugar (20 parts by weight) was used as the saccharide, 15 parts by weight of the cocoa powder as the taste providing material, 10 parts by weight of the sweetened condensed milk, 0.8 part by weight of salt, 0.8 part by weight of the baking soda, and an appropriate amount of vanilla were added to the non-gelatinized flour and the gelatinized flour, and mixed in the form of powder for a minute using a vertical type cake mixer until homogeneous. The shortening (7 parts by weight) was melted at 40°C, and added as the oil and fat and further mixed for five minutes while 80 parts by weight of water was added thereto at the same time, so that an elastic dough was obtained. The dough was extruded via a ring-shape nozzle of an extruder having the outer diameter of 6.8 mm and the inner diameter of 5 mm and thereby shaped, and the shaped dough was disposed on the light mesh while being slightly stretched at the same time. Next, the dough was baked for ten minutes at 200°C in an fixed oven, so that the remaining moisture content was reduced to 1 weight %, and thereafter cut into 130 mm portions. The obtained baked snack had an outer diameter of 6 mm, an inner diameter of 3.8 mm and an even hollow stick shape, and no blister was found to form. The baked snack further had a light and crispy texture, easily melted in the mouth, was not powdery and dry at all, and had a solid cocoa flavor.

Further, melted chocolate at 40°C was injected into a hollow part of the obtained baked snack via an opening part thereof at one end using a filling machine. Then, the baked snack was cooled for 10 minutes at 15°C so as to solidify the chocolate. As a result, the chocolate-composite baked snack, into which chocolate was injected was obtained. The obtained chocolate-composite baked snack more easily melted in the mouth with a synergistic effect of the baked snack and chocolate combined, was not powdery and dry at all, and was very delicious having a light and crispy texture and a thick chocolate flavor.

### (Example 2)

Roasted wheat flour (80 parts by weight) was used as the non-gelatinized flour, and 20 parts by weight of the gelatinized wheat flour was used as the gelatinized flour. The total weight of the non-gelatinized flour and the gelatinized flour was 100 parts by weight. Sugar (20 parts by weight) was used as the saccharide, 15 parts by weight of cocoa powder as the taste providing material, 10 parts by weight of sweetened condensed milk, 0.8 part by weight of salt, 0.8 part by weight of baking soda and an appropriate amount of vanilla were added to the non-gelatinized flour and the gelatinized flour, and mixed in the form of powder for a minute using the vertical type cake mixer until homogeneous. Then, 7 parts by weight of shortening melted at 40°C was added as the oil and fat to the mixture, and further mixed for five minutes while 65 parts by weight of water was being added thereto at the same time so that an elastic dough was obtained. The obtained dough was extruded via a ring-shape nozzle of an extruder having the outer diameter of 7.5 mm and the inner diameter of 5 mm and thereby shaped, and disposed on the light mesh while being slightly stretched at the same time. Next, the dough was baked for ten minutes at 200°C in a fixed oven so that the remaining moisture content was reduced to 1 weight %, and thereafter cut into 130 mm portions. The obtained baked snack had an outer diameter of 6.5 mm, an inner diameter of 3.5 mm and an even hollow stick shape, and no blister was found to have formed. The baked snack further had a light and crispy texture, easily melted in the mouth, was not powdery and dry at all, and had a solid cocoa flavor.

### (Comparison Example 1)

Roasted wheat flour (100 parts by weight) was used as the non-gelatinized flour. Sugar (20 parts by weight) was used as the saccharide, 15 parts by weight of cocoa powder as the taste providing material, 10 parts by weight of sweetened condensed milk, 0.8 part by weight of salt, 0.8 part by weight of baking soda and an appropriate amount of vanilla were added to the non-gelatinized flour, and mixed in the form of powder for a minute using the vertical type cake mixer until homogeneous. Then, 7 parts by weight of shortening as the oil and fat melted at 40°C was added to the mixture, and further mixed for five minutes while 60 parts by weight of water was being added thereto at the same time so as to obtain a dough. The obtained dough was not elastic enough to remain in one piece and as stretchable as in examples 1 and 2. The dough was extruded via a ring-shape nozzle of an extruder having the outer diameter of 6.8 mm and the inner diameter of 5 mm and thereby shaped on light mesh. However, holes were generated in the dough, when stretched, due to the inadequacy in the dough's stretching performance. Further, there were some pieces that could not maintain the hollow shape. Next, the dough was baked for 10 minutes at 200°C in the fixed oven so that the remaining moisture content therein was reduced to 1 weight %, and then cut into 130 mm portions. As a result, some of the obtained baked snack had holes and others were deformed, and a baked snack having the hollow shape could not be obtained.

### (Comparison Example 2)

Strong wheat flour (50 parts by weight) and weak wheat flour (50 parts by weight) were used. The total weight of the strong wheat flour and the weak wheat flour was 100 parts by weight. Sugar (20 parts by weight) was used as the saccharide, 7 parts by weight of shortening as the oil and fat, 15 parts by weight of cocoa powder as the taste providing material, 10 parts by weight of sweetened condensed milk, 0.8 part by weight of salt, 0.8 part by weight of baking soda, an appropriate amount of vanilla, an appropriate amount of enzyme and an appropriate amount of water were added to the strong wheat flour and the weak wheat flour and mixed and agitated according to a conventional method so that a biscuit dough was obtained. The obtained dough was not sufficiently elastic to remain in one piece and as stretchable as in examples 1 and 2. The dough was extruded via the ring-shape nozzle of the extruder having an outer diameter of 6.8 mm and an inner diameter of 5 mm and thereby shaped on light mesh. However, holes were generated in the dough, when stretched, due to the inadequacy of the dough's stretching performance. Further, there were some pieces that could not maintain the hollow shape. Next, the dough was baked for 10 minutes at 200°C in a fixed oven so that the remaining moisture content therein was reduced to 1 weight %, and then cut in 130 mm portions. The obtained baked snack was deformed, and a baked snack having the hollow shape could not be obtained.

### (Comparison Example 3)

Strong wheat flour (50 parts by weight) and weak wheat flour (50 parts by weight) were used. The total weight of the strong wheat flour and the weak wheat four was 100 parts by weight. Sugar (13 parts by weight) was used as the saccharide, 7 parts by weight of shortening as the oil and fat, 5 parts by weight of cocoa powder as the taste providing material, 3 parts by weight of sweetened condensed milk, 0.8 part by weight of salt, 0.8 part by weight of baking soda, an appropriate amount of vanilla, an appropriate amount of enzyme and an appropriate amount of water were added to the strong wheat flour and the weak wheat flour and mixed and agitated according to the conventional method so that a biscuit dough was obtained. The dough was extruded via the ring-shape nozzle of an extruder having an outer diameter of 6.8 mm and an inner diameter of 5 mm and thereby shaped, and then, disposed on the light mesh while being slightly stretched. Next, the dough was baked for 10 minutes at 200°C in a fixed oven so that the remaining moisture content therein was reduced to 1 weight %, and then cut in 130 mm portions. The obtained baked snack had the hollow stick shape whose outer diameter was 6 mm and the inner diameter was 4 mm. However, the texture of the obtained baked snack was powdery and dry and fell to pieces if the food product got stuck between the teeth, and the meltability in the mouth was rather reduced. Thus, the texture of the obtained food product was quite inferior to the baked snacks according to the working examples. Further, the obtained baked snack had some cocoa flavor, which was however, was considerably slight in comparison to the baked snacks according to working examples 1 and 2, resulting in a failure to obtain a satisfactory flavor.

### (Panel Test 1)

A food tasting examination was performed involving 12 female senior high school students as panelists, was carried out for the chocolate-composite baked snack obtained in Example 1 and a conventional product, a commercially available product A in which a hollow stick-type pretzel is filled with chocolate. After the tasting, the panelists were asked of their preference for taste, regarding which product is preferred.

In the obtained result, eight of the panelists preferred the product of Example 1, three of had no particular preference between the two products, and one preferred the commercially available product A, showing that the product of Example 1 had an overwhelmingly better taste. Further, the baked snack of Example 1 was evaluated as particularly preferred in terms of it's excellent texture and overall flavor in the taste preference.

### INDUSTRIAL APPLICABILITY

According to the present invention, a baked snack having a hollow stick shape that has a high shapability, is easily melt in the mouth and is well-moistened with no powdery and dry texture is provided. In the baked snack of the present invention, a large amount of taste providing material can be blended in order to improve the taste thereof. The novel baked snack having the hollow stick shape suitable for the mass production and processing and having an even shape with reduced blistering can be provided without demanding any special device and complicated process.

## Claims

1. A baked snack having a hollow stick shape obtained by baking a dough including an non-gelatinized flour and a gelatinized flour, wherein the dough does not substantially include active gluten.

2. A baked snack as claimed in Claim 1, wherein the moisture content is 5 weight % or less.

3. A baked snack as claimed in Claim 2, wherein a weight ratio of the non-gelatinized flour to the gelatinized flour is 40:60 - 95:5.

4. A baked snack as claimed in Claim 3, wherein the weight ratio is 50:50 - 80:20.

5. A baked snack as claimed in Claim 2, wherein the non-gelatinized flour is derived from wheat.

6. A baked snack as claimed in Claim 2, wherein the non-gelatinized flour includes a roasted wheat flour.

7. A baked snack as claimed in Claim 2, wherein the gelatinized flour includes a gelatinized cereal flour.

8. A baked snack as claimed in Claim 2, wherein the gelatinized flour includes a gelatinized wheat flour.

9. A baked snack as claimed in Claim 2, wherein the non-gelatinized flour includes a roasted wheat flour, and the gelatinized flour includes a gelatinized wheat flour.

10. A baked snack as claimed in Claim 2, wherein the dough includes:
5 to 50 parts by weight of saccharides;
1 to 50 parts by weight of oils and fats; and
0 to 100 parts by weight of a taste providing material with respect to a total 100 parts by weight of the non-gelatinized flour and the gelatinized flour.

11. A baked snack as claimed in Claim 10, wherein the dough includes:
10 to 30 parts by weight of saccharides;
5 to 20 parts by weight of oils and fats; and
10 to 30 parts by weight of taste providing material with respect to the total 100 parts by weight of the non-gelatinized flour and the gelatinized flour.

12. A baked snack as claimed in Claim 11, wherein the taste providing material includes a cocoa powder.

13. A baked snack as claimed in Claim 2, wherein an outer diameter of the baked snack is 15 mm or less, and an inner diameter thereof is 40% or more of the outer diameter.

14. A baked snack as claimed in Claim 13 , wherein a thickness of the baked snack is 2.5 mm or less in at least a part thereof.

15. A baked snack as claimed in Claim 2, wherein the inside of a hollow stick shape portion of the baked snack is filled with a filling material.

16. A method of making a baked snack comprising the steps of:
mixing raw materials of the baked snack including an non-gelatinized flour and a gelatinized flour to obtain a mixed dough substantially not including active gluten;
extruding the mixed dough via a nozzle into a hollow stick shape to obtain a shaped dough; and
baking the shaped dough to obtain the baked snack having the hollow stick shape.

17. A method as claimed in Claim 16, further comprising a step of injecting a filling material into the inside of a hollow stick shape portion of the baked snack via an opening end of the baked snack having the hollow stick shape obtained in the baking step.
